Europäisches Patentamt

European Patent Office

Office européen des brevets

(11) Publication number: **0 315 560 B1**

(12) **EUROPEAN PATENT SPECIFICATION**

(45) Date of publication of patent specification: **30.09.92** (51) Int. Cl.⁵: **F16L 11/12**

(21) Application number: **88500082.8**

(22) Date of filing: **26.08.88**

(54) **Fire hose.**

(30) Priority: **02.11.87 ES 8703380 U**

(43) Date of publication of application:
**10.05.89 Bulletin 89/19**

(45) Publication of the grant of the patent:
**30.09.92 Bulletin 92/40**

(84) Designated Contracting States:
**CH DE FR GB IT LI NL**

(56) References cited:
**EP-A- 0 126 306**
**AT-B- 209 647**

**Dubbels Taschenbuch, Vol. 1, pp. 558-559**

(73) Proprietor: **PRODUCTOS Y MANGUERAS ES-
PECIALES, S.A.**
**Ctra. de Ciruena, s/n**
**E-26250 Santo Domingo de la Calzada La
Rioja(ES)**

(72) Inventor: **Palacios Luzuriaga, José Luis**
**Paseo de los Molinos, 10**
**F-26250 Santo Domingo de la Calzada(ES)**

(74) Representative: **Ponti Grau, Ignasi**
**Paseo de Gracia, 33**
**E-08007 Barcelona(ES)**

## Description

The present invention relates to a fire hose provided with reflecting properties making it easier to locate, even in adverse visibility conditions.

BACKGROUND OF THE INVENTION

The fire hoses used hitherto are hard to locate during a fire or after the end of same. This is due to several causes. On the one hand, when a fire occurs at night, the absence of ambient light renders very difficult locating the hoses. Even by daylight, the presence of dense smoke and the dirt falling onto the hose, either mud, bough, foliage or other, come about to hidden the hose.

As a consequence thereof it comes that many hose lengths are lost, specially in forest fires, because if the hoses are not immediately recovered, they become burnt or are captured by non proprietor persons. An evaluation of the losses on this ground raised up to 30 %.

Another drawback derived from the absence of means for visualizing fire hoses is that the firemen are unable to use the hoses as a guide means for returning to their base, and even it may come to risk the life of staff which finds himself in a low visibility situation and is unable to see the hose direction.

It must also be cited the difficulty for the fire command, either on ground or airborne, to evaluate the position of the attack or defense lines as regards the fire, when the hoses are out of sight. This means a very important lack of information at the time of deciding a change of position of the used means, or whatever actuation in view of the features that the fire is coming. It must be borne in mind the fact that hose lines of more than 1 km are very frequent.

EP-A- 0 126 306 discloses a light reflecting hose the outer surface of which has adhered thereto or formed thereon a layer of material carrying light reflecting particles in order to make the hose visible under low light conditions. Such material layers are, however, prone to friction wear when the hose is used on rough surface, such as in fighting forestal fires, such that more or less of the reflecting particles are lost thus impairing the light reflecting properties of the hose. On the other hand the layers carrying the light reflecting particles must be applied on the already formed hose, which implies a further manufacturing step or requires corresponding modification of the extruder with which the hose is produced, which adds to the cost of the hose.

AT-B-209 647 discloses a hose formed of a tubular flexible and fluid impervious body wherein an outer layer of the tubular body is provided with luminescent colourings.

DESCRIPTION OF THE INVENTION

All of the above drawbacks have been surpassed by means of the fire hose making the subject of the invention.

The fire hose in question, which is formed of a tubular flexible and fluid imervious body, comprises light reflecting granules at least in an outer layer of its body to make the hose visible under low light conditions is featured in that all of the tubular body wall thickness is formed of a rubber mass having reflecting granules admixed thereto thus conferring the reflecting property through the whole wall thickness of the hose.

BRIEF DESCRIPTION OF THE DRAWINGS

For a better understanding of what is described in the present specification, a drawing is annexed showing, only by way of example, an embodiment of the fire hose according to the invention. In the said drawing:

Figure 1    is a perspective view of a fire hose in coiled arrangement; and

Figure 2    is a cross section, at an enlarged scale, of the fire hose according to the invention and having the reflecting particles incorporated in its whole thickness.

DESCRIPTION OF A PREFERRED EMBODIMENT

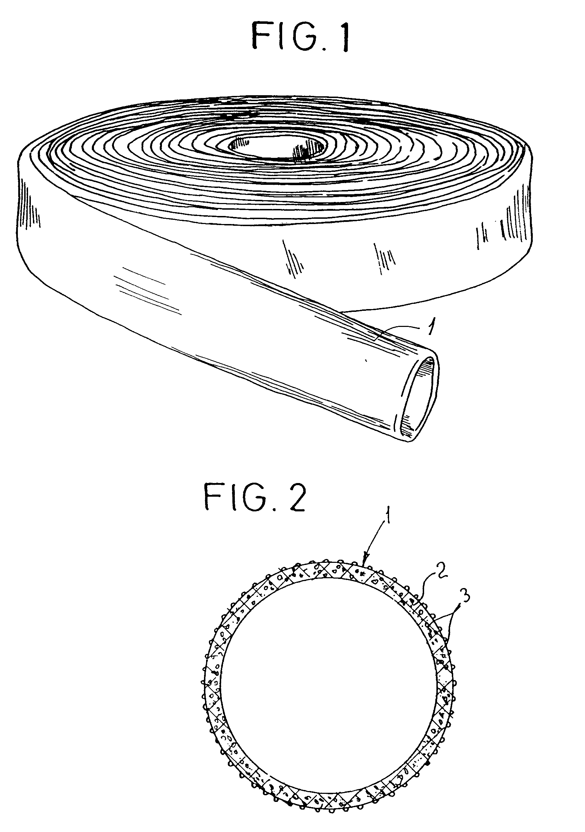

The fire hose according to the invention is formed, as better seen in Figure 2, of a tubular body 1 formed of a mass of extruded rubber 2 reinforced by means of a synthetic fabric. According to the invention, all of the tubular body has reflecting material particles or solid granules 3 incorporated therein and admixed with the rubber mass.

As shown in Figure 2 of the drawings, all of the thickness of the fire hose wall 1 is of a reflecting nature. The manufacture of the fire hose in this case is performed by means of a single extrusion process of a rubber mass forming rawstock having the reflective granules admixed therein.

The manufacturing procedure of the fire hose making the subject of the invention is cited, however, only in short and non restrictive example of the invention.

It is obvious that the fire hose may be given diverse colours to make its identification easier.

From the above and looking at the drawing, it is obvious that the fire hose making the subject of the invention has reflecting properties that make it visible in the worst ambient conditions with scarce light. The rather low existing light, as produced by the flames, the reduced ambient light, or the light of torches or searchlights, is reflected by the fire hose. Owing to this, the fire hose may be found easily and recovered when the fire extinction works are done, thus avoiding the fire hose to become lost. Furthermore, as the fire hoses are easily located, the firemen my follow the hose lines to return to their base, even when the visibility conditions are very defective. Finally, it is important to outline that with the fire hose according to the invention, the fire command directing the fire extinction work can easily locate the fire attack and defense lines, thus suitably evaluating the decisions to be taken at each moment in function of the fire evolution and the location of the fire hoses in working condition.

The manufacture costs of the fire hose according to the invention are more than paid off in view of the fact that the hose prevents the loss of great number of hose meters at each fire hazard because of being not found after the fire is extinct.

## Claims

1. Fire hose formed of a tubular flexible and fluid impervious body (1) comprising light reflecting granules (3) at least in an outer layer of its body to make the hose visible under low light conditions, characterized in that all of the tubular body wall thickness is formed of a rubber mass having reflecting granules (2) admixed thereto thus conferring the reflecting property through the whole wall thickness of the hose (1).

## Patentansprüche

1. Feuerlöschschlauch aus einem rohrförmigen flexiblen und flüssigkeitsundurchlässigen Körper (1), welcher Lichtreflektierende Körner (3) wenigstens in einer Außenschicht desselben zur Sichtbarmachung des Schlauches bei schwachen Lichtverhältnissen aufweist, dadurch gekennzeichnet, daß die gesamte Wanddicke des rohrförmigen Körpers aus einer Gummimasse gebildet ist, der reflektierende Körner (2) zur Verleihung der Reflexionsfähigkeit über die gesamte Wanddicke des Schlauches (1) zugemischt sind.

## Revendications

1. Manche à incendie formé d'un corps (1) tubulaire flexible imperméable comprenant des granules reflétant la lumière, au moins dans une couche extérieure de ce corps pour rendre le manche visible dans des conditions de faible lumière, caractérisé en ce que toute l'épaisseur de la paroi du corps tubulaire est formée d'une masse de cautchouc ayant des granules (2) réfléchissantes mélangées avec celle-ci, conférant ainsi la propriété refléchissante à toute l'épaisseur de la paroi du manche.

# FIG. 1

# FIG. 2